# DEMANDE DE BREVET EUROPEEN

(11) **EP 1 986 122 A1**
(43) Date de publication de la demande: **29.10.2008**
(21) Numéro de dépôt: 08007008.9
(22) Date de dépôt: 09.04.2008
(51) Int. Cl.: G06F 21/02, G06F 21/00

(54) **Unite de traitement securisee**

(30) Priorité: 23.04.2007 FR 0702913
(71) Demandeur: STMICROELECTRONICS SA, 92120 Montrouge (FR)
(72) Inventeur: Roquelaure, Philippe, 13320 Bouc Bel Air (FR)
(74) Mandataire: Marchand, André

(57) **Abrégé**

Procédé d'exécution par une unité de traitement (CPU1) d'un programme stocké dans une mémoire (MEM), comprenant des étapes de : détection d'une information durant l'exécution du programme par l'unité de traitement, et si l'information est détectée, de déclenchement l'exécution par l'unité de traitement d'un sous-programme caché. Application de l'invention à la sécurisation d'un circuit intégré.

## Description

La présente invention concerne la protection des circuits intégrés, et notamment ceux qui sont présents dans les cartes à puce.

La présente invention concerne plus particulièrement un procédé pour protéger le programme exécuté par une unité de traitement d'un circuit intégré contre des attaques visant à extraire des données confidentielles mémorisées par le circuit intégré.

Les circuits intégrés sécurisés mémorisent des données confidentielles qui doivent rester inaccessibles à l'utilisateur final. Ces données confidentielles peuvent comprendre des clés de chiffrement, ou plus généralement des clés de protection de données, et des données ou du code exécutable permettant de générer ou d'accéder en mémoire à de telles clés.

Malgré toutes les protections prévues dans les circuits intégrés sécurisés, il reste possible d'extraire le code exécutable mémorisé par le circuit intégré, en profitant de faiblesses non maîtrisées de ce dernier. Le code exécutable ainsi extrait peut alors être analysé et/ou exécuté par un processeur compatible mais non protégé. En faisant exécuter le code exécutable extrait par le processeur compatible non protégé, il est possible d'accéder à toutes les données transitant entre l'unité de traitement et la mémoire, y compris les clés de protection.

Certains circuits intégrés sécurisés tels que ceux incorporés dans les cartes à puce, comportent un coprocesseur pour effectuer des calculs "sensibles", notamment des calculs cryptographiques manipulant des clés secrètes. Il en résulte que le coprocesseur d'un tel circuit intégré est principalement visé par les attaques visant à découvrir les données secrètes manipulées. Certaines attaques, notamment celles consistant à provoquer des erreurs dans le fonctionnement du coprocesseur sont particulièrement efficaces.

Par ailleurs, l'introduction d'un tel coprocesseur dans un circuit intégré est peu souhaitable car elle contribue à augmenter la complexité du circuit intégré et donc son coût.

Une idée de l'invention est de prévoir sous-programme caché dans le programme exécuté par l'unité de traitement du circuit intégré, et de déclencher l'exécution du sous-programme caché à la suite de la détection durant l'exécution du programme d'un événement distinct de l'apparition d'une instruction d'appel du sous-programme.

Plus particulièrement, la présente invention concerne un procédé d'exécution par une unité de traitement d'un programme stocké dans une mémoire. Selon un mode de réalisation, le procédé comprend des étapes consistant à détecter une information durant l'exécution du programme par l'unité de traitement, et si l'information est détectée, déclencher l'exécution par l'unité de traitement d'un sous-programme caché.

Selon un mode de réalisation, l'information de déclenchement du sous-programme caché est une donnée circulant sur un bus.

Selon un mode de réalisation, l'information de déclenchement est modifiable par l'unité de traitement.

Selon un mode de réalisation, le sous-programme caché est modifiable par l'unité de traitement.

Selon un mode de réalisation, l'information de déclenchement est émise par l'unité de traitement sous une forme chiffrée, est déchiffrée, puis est stockée dans un registre, le contenu du registre étant comparé à chaque lecture d'une instruction dans la mémoire.

Selon un mode de réalisation, le sous-programme caché est transmis par l'unité de traitement sous une forme chiffrée, est déchiffré, puis stocké en vue de son exécution par l'unité de traitement.

Selon un mode de réalisation, le sous-programme caché est transmis par l'unité de traitement sous une forme chiffrée, puis stocké en vue de son exécution par l'unité de traitement, et déchiffré lors de son exécution.

Selon un mode de réalisation, l'information de déclenchement et le sous-programme caché sont déchiffrés de manières différentes.

Selon un mode de réalisation, le sous-programme caché est stocké dans des registres internes.

Selon un mode de réalisation, le sous-programme caché est stocké dans la mémoire.

Selon un mode de réalisation, l'information de déclenchement est une adresse de lecture de la mémoire émise par l'unité de traitement.

Selon un mode de réalisation, l'information de déclenchement appartient au jeu d'instructions exécutables par l'unité de traitement.

Selon un mode de réalisation, l'instruction lue dans la mémoire et qui correspond à l'information de déclenchement est exécutée avant ou après le sous-programme caché.

Selon un mode de réalisation, le procédé comprend des étapes de maintien d'un pointeur de programme à une valeur inchangée pendant l'exécution du sous-programme caché.

L'invention concerne également un circuit intégré comprenant une unité de traitement reliée à une mémoire et configurée pour lire et exécuter chaque instruction d'un programme stocké dans la mémoire.

Selon un mode de réalisation, le circuit intégré comprend un module séquenceur configuré pour détecter une information durant l'exécution du programme par l'unité de traitement, et si l'information est détectée, déclencher l'exécution par l'unité de traitement d'un sous-programme caché.

Selon un mode de réalisation, l'information de déclenchement du sous-programme caché est une donnée circulant sur un bus.

Selon un mode de réalisation, le module séquenceur comprend un registre de mémorisation de l'information de déclenchement modifiable par l'unité de traitement.

Selon un mode de réalisation, le module séquenceur comprend un ensemble de registres mémorisant le sous-programme caché.

Selon un mode de réalisation, le module séquenceur est configuré pour lire le sous-programme caché dans la mémoire.

Selon un mode de réalisation, l'information de déclenchement est une adresse de lecture de la mémoire émise par l'unité de traitement.

Selon un mode de réalisation, l'information de déclenchement appartient au jeu d'instructions exécutables par l'unité de traitement.

Selon un mode de réalisation, le module séquenceur est configuré pour déchiffrer l'information de déclenchement reçue de l'unité de traitement et la stocker dans un registre sous forme déchiffrée.

Selon un mode de réalisation, le module séquenceur est configuré pour déchiffrer la le sous-programme caché reçu de l'unité de traitement et stocker le sous-programme sous forme déchiffrée.

Selon un mode de réalisation, le module séquenceur est configuré pour déchiffrer de manières différentes l'information de déclenchement et le sous-programme caché.

Selon un mode de réalisation, le module séquenceur est configuré pour déchiffrer chaque instruction du sous-programme caché mémorisé sous une forme chiffrée avant de la transmettre pour exécution à l'unité de traitement.

Selon un mode de réalisation, l'information de déclenchement appartient au jeu d'instructions exécutables par l'unité de traitement.

Selon un mode de réalisation, le module séquenceur est configuré pour transmettre à l'unité de traitement l'instruction interceptée qui correspond à l'information de déclenchement avant ou après les instructions du sous-programme caché.

Selon un mode de réalisation, l'unité de traitement est configurée pour maintenir un pointeur de programme à une valeur inchangée pendant l'exécution du sous-programme caché.

Selon un mode de réalisation, le circuit intégré comprend plusieurs modules séquenceurs pour exécuter plusieurs sous-programmes cachés.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 représente sous la forme de blocs un premier mode de réalisation d'un circuit intégré selon l'invention,
- la figure 2 représente sous la forme de blocs un module de gestion d'un pointeur de programme du circuit intégré de la figure 1,
- la figure 3 illustre sous la forme de chronogrammes, le fonctionnement du circuit intégré représenté sur la figure 1,
- la figure 4 représente sous la forme de blocs un second mode de réalisation d'un circuit intégré selon l'invention,
- la figure 5 représente sous la forme de blocs un module de gestion d'un pointeur de programme du circuit intégré de la figure 4,
- la figure 6 illustre sous la forme de chronogrammes, le fonctionnement du circuit intégré représenté sur la figure 4,
- la figure 7 représente sous la forme de blocs un troisième mode de réalisation d'un circuit intégré selon l'invention,
- la figure 8 illustre sous la forme de chronogrammes, le fonctionnement du circuit intégré représenté sur la figure 7.

Sur les figures, seuls les éléments nécessaires à la compréhension de l'invention ont été représentés pour des raisons de clarté.

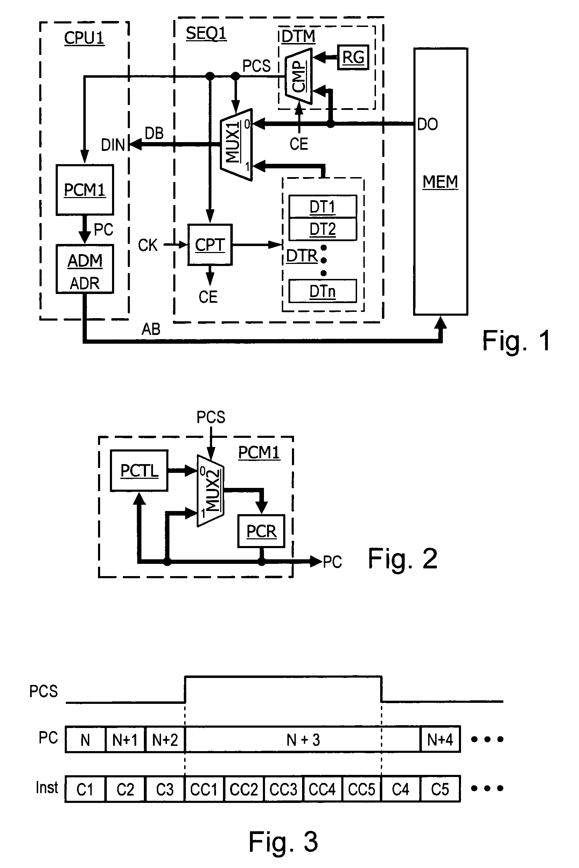

La figure 1 représente un circuit intégré selon un premier mode de réalisation de l'invention. Sur la figure 1, le circuit intégré comprend une unité de traitement CPU1 reliée à une mémoire MEM par l'intermédiaire d'un séquenceur SEQ1 selon un premier mode de réalisation.

L'unité de traitement CPU1 comprend un module de gestion de pointeur de programme PCM1, un module de gestion d'adresse ADM, et une entrée de données DIN connectée à un bus de données DB. Le module PCM1 fournit la valeur d'un pointeur de programme PC au module ADM. Le module ADM comporte une sortie d'adresse ADR connectée à un bus d'adresse AB.

La mémoire MEM comprend une entrée d'adresse connectée au bus d'adresse AB et une sortie de donnée DO qui, au lieu d'être connectée au bus de donnée DB comme dans les circuits intégrés de l'art antérieur, est reliée au bus de donnée par l'intermédiaire du séquenceur SEQ1.

Le séquenceur SEQ1 comprend un multiplexeur MUX1, un module de détection DTM, un ensemble de registres DTR (par exemple une banque de registres) et un compteur CPT. Le multiplexeur MUX1 est connecté en sortie au bus de donnée DB et en entrée à la sortie de donnée DO de la mémoire MEM. Une autre entrée du multiplexeur MUX1 est connectée à une sortie de l'ensemble de registres DTR. Le module de détection DTM est connecté à la sortie DO de la mémoire MEM et fournit un signal PCS qui est envoyé sur une entrée de commande du multiplexeur MUX1, sur une entrée de déclenchement du compteur CPT, et sur une entrée du module de gestion de pointeur de programme PCM1.

Le compteur CPT est cadencé par un signal d'horloge CK pour ainsi d'adresser successivement chacun des registres DT1, DT2,... DTn de l'ensemble de registres DTR. Le signal d'horloge CK peut être celui qui cadence également la lecture de la mémoire MEM par l'unité CPU1.

Lorsque le signal PCS est à 0, le multiplexeur MUX1 envoie sur le bus de données DB vers l'unité CPU1, le mot lu dans la mémoire MEM à l'adresse fournie par le bus AD. Lorsque le signal PCS est à 1, le contenu du registre DT1, DT2,... DTn adressé par le compteur CPT qui est envoyé sur le bus DB, à la place d'un mot lu dans la mémoire.

La figure 2 représente le module de gestion du pointeur de programme PCM1. Le module PCM1 comprend un multiplexeur MUX2, un module de contrôle PCTL et un registre PCR mémorisant la valeur du pointeur de programme PC. Une sortie du module PCTL est connectée à une entrée du multiplexeur MUX2. La sortie du multiplexeur MUX2 est connectée à une entrée du registre PCR. La valeur du pointeur de programme PC mémorisée dans le registre PCR est envoyée sur une autre entrée du multiplexeur MUX2 et sur une entrée du module PCTL. Le multiplexeur MUX2 est commandé par le signal PCS issu du module DTM. Lorsque le signal PCS est à 0, le multiplexeur MUX2 envoie la valeur du pointeur de programme en sortie du module PCTL dans le registre PCR. Lorsque le signal PCS est à 1, le multiplexeur maintient le contenu du registre PCR inchangé.

Le module PCTL regroupe les fonctions classiques de gestion du pointeur de programme d'une unité de traitement, à savoir les fonctions d'incrémentation et de modification de la valeur du pointeur de programme en fonction des instructions à exécuter, selon qu'elles laissent inchangée ou non la valeur du pointeur de programme, comme les instructions de saut, d'appel de sous-programme ou de retour en fin de sous-programme).

Le module de détection DTM est conçu pour détecter un code particulier lu dans la mémoire MEM à l'adresse indiquée par le pointeur de programme PC. Le module DTM comprend par exemple un comparateur CMP pour comparer le contenu d'un registre RG au code en sortie DO de la mémoire MEM. Si le contenu du registre RG est égal au code lu en mémoire, le signal PCS en sortie du comparateur CMP passe à 1. Lorsque le signal PCS passe à 1, le compteur CPT est initialisé et déclenché pour sélectionner le premier registre DT1 de l'ensemble de registres DTR. Le multiplexeur MUX1 applique la valeur lue dans le registre sélectionné de l'ensemble de registres DTR sur le bus de donnée DB. Ainsi, le code d'instruction lu par l'unité de traitement dans la mémoire MEM est remplacé par la valeur du premier registre DT1. Au coup d'horloge suivant, la valeur du second registre DT2 est lue et envoyée sur le bus de donnée DB, et ainsi de suite. En fin de comptage, lorsque le dernier registre DTn est adressé, le compteur CPT émet un signal de fin de comptage CE qui est envoyé au module de détection DTM. A la réception du signal CE, le comparateur CMP du module DTM est initialisé pour placer le signal PCS à 0. Le module PCM1 débloque alors le pointeur de programme PC qui est à nouveau incrémenté pour lire le code d'instruction suivant dans la mémoire MEM.

La figure 3 illustre sous la forme de chronogrammes le fonctionnement du circuit intégré dans le cas où le nombre de registres dans l'ensemble de registres DTR est égal à 5. La figure 3 représente la forme du signal PCS, les valeurs successives du pointeur de programme PC et les valeurs successives du code d'instruction Inst transmis à l'unité CPU1 par le bus de donnée DB.

Le signal PCS est tout d'abord à 0, pendant que le pointeur de programme prend les valeurs successives N, N+1, N+2, et les codes d'instruction lus dans la mémoire MEM sont successivement C1, C2, C3. Le module DTM détecte que le code C3 correspond à un code déclencheur du séquenceur SEQ1 mémorisé dans le registre RG. Le signal PCS passe alors à 1, ce qui bloque la valeur du pointeur de programme PC mémorisé dans le registre PCR à N+3. Les instructions CC1-CC5 d'un sous-programme caché mémorisé dans l'ensemble de registres DTR sont alors successivement lues et transmises à l'unité CPU1. A la fin de la lecture du dernier registre DTn de l'ensemble de registres DTR, le signal PCS repasse à 0, ce qui déclenche la lecture de l'adresse N+3 dans la mémoire MEM, c'est-à-dire l'adresse qui aurait due être lue si le module DTM n'avait pas détecté de code de déclenchement. Au cycle de lecture suivant, le module PCTL calcule la valeur du pointeur de programme PC en fonction de l'instruction à exécuter. Dans l'exemple de la figure 3, le pointeur de programme passe à la valeur N+4. Durant ces deux cycles de lecture, les codes d'instructions C4, C5 qui suivent le code d'instruction C3 sont alors lus dans la mémoire MEM.

Grâce à ces dispositions, l'unité CPU1 exécute un sous-programme ne figurant pas dans la mémoire MEM, lorsqu'un code d'instruction particulier mémorisé dans le registre RG est lu dans la mémoire. Bien entendu, ce code particulier est distinct de l'instruction d'appel de sous-programme. Ainsi, si le code exécutable est extrait frauduleusement de la mémoire MEM, il ne sera pas exécutable par un processeur compatible, mais non sécurisé, puisque le processeur n'effectuera pas le saut vers le sous-programme caché mémorisé par le séquenceur SEQ1 et n'a pas accès à ce sous-programme.

Le code d'instruction C3 (mémorisé dans le registre RG) qui déclenche le séquenceur SEQ1, peut appartenir au jeu d'instructions du processeur sécurisé comportant l'unité CPU1, afin de ne pas être facilement repérable. L'exécution par le processeur non sécurisé de ce code d'instruction ne déclenchera pas l'exécution du sous-programme caché mémorisé dans l'ensemble de registres, et pourra, selon la valeur du code de déclenchement choisie, générer une erreur d'exécution.

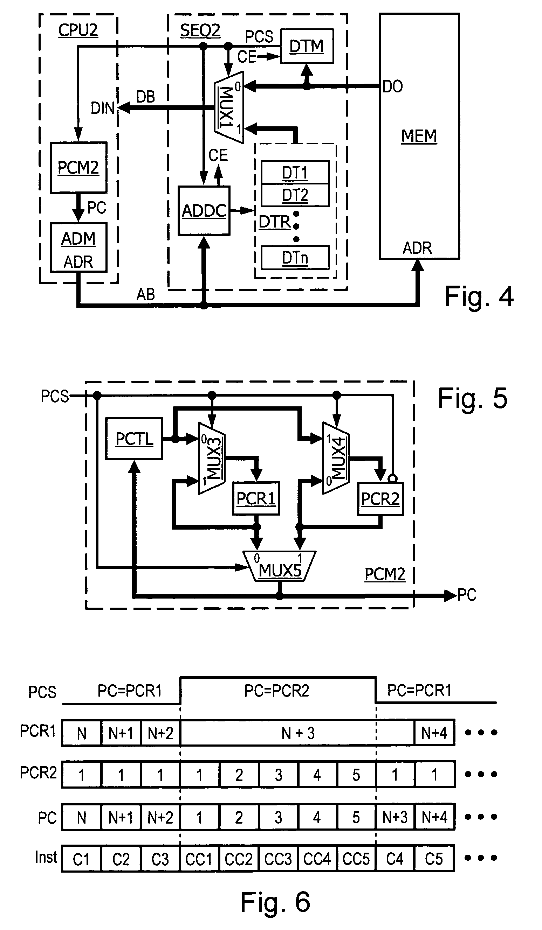

La figure 4 représente un autre mode de réalisation d'un circuit intégré selon l'invention. Les éléments précédemment décrits sont associés aux mêmes références sur la figure 4. Sur la figure 4, le circuit intégré comprend une unité de traitement CPU2 et un séquenceur SEQ2 connecté entre l'unité de traitement et une mémoire MEM. Le séquenceur SEQ2 est sensiblement identique au séquenceur SEQ1 de la figure 1 mis à part que le compteur CPT est remplacé dans le séquenceur SEQ2 par un décodeur d'adresse ADDC qui adresse l'ensemble de registres DTR en fonction de l'adresse transmise sur le bus d'adresse AB par l'unité de traitement. L'unité de traitement CPU2 comprend un module de gestion de pointeur de programme PCM2 fournissant le pointeur de programme PC au module de gestion d'adresse ADM.

La figure 5 représente le module de gestion de pointeur de programme PCM2. Le module PCM2 comprend le module de contrôle PCTL précédemment décrit, trois multiplexeurs MUX3, MUX4, MUX5, et deux registres PCR1, PCR2 de mémorisation d'une valeur du pointeur de programme PC. Une sortie de pointeur de programme du module PCTL est connectée à une entrée du multiplexeur MUX3 et une entrée du multiplexeur MUX4. La sortie du multiplexeur MUX3 est connectée à l'entrée du registre PCR1. La sortie du registre PCR1 est connectée à une entrée du multiplexeur MUX3 et à une entrée du multiplexeur MUX5. La sortie du multiplexeur MUX4 est connectée à l'entrée du registre PCR2. La sortie du registre PCR2 est connectée à une autre entrée du multiplexeur MUX4 et à une autre entrée du multiplexeur MUX5. La sortie du multiplexeur MUX5 fournit la valeur du pointeur de programme PC en sortie du module PCM2 et à une entrée du module PCTL. Les registres MUX3, MUX4 et MUX5 sont commandés par le signal PCS fourni par le module de détection DTM du séquenceur SEQ2. Lorsque le signal PCS est à 0, le registre PCR2 est initialisé à 1, le multiplexeur MUX3 envoie la sortie du module PCTL au registre PCR1, le multiplexeur MUX4 est rebouclé sur le registre PCR2, et le multiplexeur MUX5 envoie le contenu du registre PCR1 en sortie du module PCM2 et au module PCTL où le pointeur de programme PC est incrémenté. Inversement, lorsque le signal PCS est à 1, le multiplexeur MUX3 est rebouclé sur le registre PCR1, le multiplexeur MUX4 envoie la sortie du module PCTL dans le registre PCR2, et le multiplexeur MUX5 envoie le contenu du registre PCR2 en sortie du module PCM2 et au module PCTL où le pointeur de programme est incrémenté.

La figure 6 illustre le fonctionnement du circuit intégré représenté sur la figure 4, lorsque le nombre de registres de l'ensemble de registres DTR est égal à 5. La figure 6 représente la forme du signal PCS, et les valeurs successives des registres PCR1, PCR2, du pointeur de programme PC et du code d'instruction Inst transmis à l'unité CPU2 par le bus de donnée DB.

Le signal PCS est tout d'abord à 0, pendant que le pointeur de programme PC mémorisé dans le registre PCR1 qui est envoyé sur le bus d'adresse AB, prend les valeurs successives N, N+1, N+2, et que le contenu du registre PCR2 est maintenu à 1. Les codes d'instruction lus dans la mémoire MEM aux adresses N, N+1, N+2 fournies par le pointeur de programme PC sont successivement C1, C2, C3. Le module DTM détecte que le code C3 correspond à un code déclencheur du séquenceur SEQ2. Le signal PCS passe alors à 1, ce qui bloque la valeur du registre PCR1 à N+3. La valeur du registre PCR2 est alors envoyée par le multiplexeur MUX5 en entrée du module PCTL où elle est recalculée (incrémentée de 1 dans l'exemple de la figure) à chaque cycle de lecture de la mémoire MEM en fonction des instructions exécutées. Le contenu du registre PCR2 qui passe successivement à 2, 3, 4, puis 5, est envoyé sur le bus AB vers le séquenceur SEQ2, où le décodeur d'adresse ADDC lit successivement le contenu des registres de l'ensemble de registres DTR. Les codes d'instructions CC1-CC5 du sous-programme caché mémorisé dans l'ensemble de registres DTR sont alors successivement lus et transmis à l'unité CPU2. A la fin de la lecture du dernier registre DTn de l'ensemble de registres DTR, le décodeur d'adresse ADDC émet un signal d'initialisation CE à destination du module de détection DTM. Le signal PCS repasse alors à 0. Il en résulte que les multiplexeurs MUX3, MUX5 envoient la sortie du registre PCR1, toujours maintenu à la valeur N+3, sur le bus d'adresse AB et en entrée du module PCTL, et que le registre PCR2 est initialisé à 1. Le code d'instruction C4 à l'adresse N+3 est alors lu dans la mémoire MEM. Au cycle de lecture suivant, le module PCTL incrémente le pointeur de programme PC qui passe alors à la valeur N+4, déclenchant la lecture du code d'instruction suivant C5 dans la mémoire MEM. Le sous-programme caché mémorisé dans l'ensemble de registres n'occupe pas nécessairement tous les registres de l'ensemble de registres DTM. Il est donc avantageux que la remise à 0 du signal PCS puisse être effectuée lorsque le dernier code d'instruction est lu dans l'ensemble de registres DTM. A cet effet, il peut être prévu un registre de contrôle pour mémoriser le nombre de registres DT1-DTn occupés par le sous-programme caché qui est mis à jour à chaque écriture dans les registres. La valeur du compteur CPT est comparée en permanence à celle du registre de contrôle et lorsque le compteur dépasse la valeur du registre de contrôle, le signal d'initialisation CE est émis pour commander la remise à 0 du signal PCS au module de détection DTM.

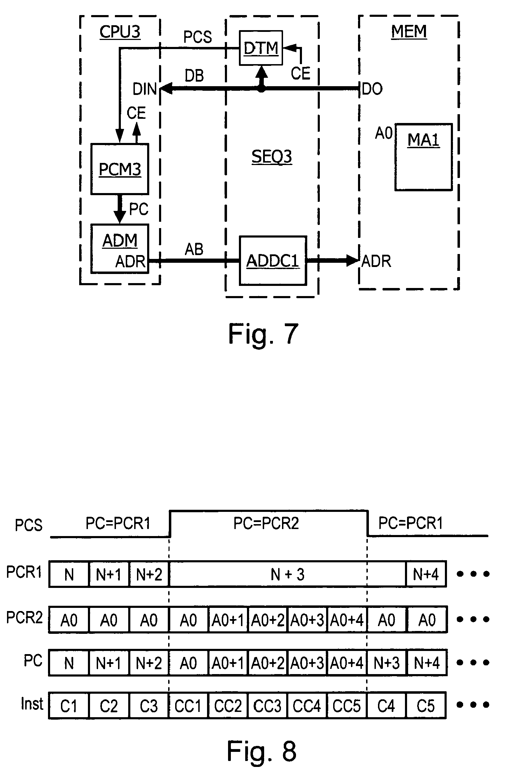

La figure 7 représente un autre mode de réalisation du circuit intégré selon l'invention. Les éléments précédemment décrits sont associés aux mêmes références sur la figure 7. Dans ce mode de réalisation, le sous-programme caché est mémorisé non pas dans des registres, mais dans une zone mémoire MA1 de l'espace adressable par l'unité de traitement, qui peut être située dans la mémoire MEM ou dans une autre mémoire.

Sur la figure 7, le circuit intégré comprend une unité de traitement CPU3 et un séquenceur SEQ3 connecté entre l'unité CPU3 et la mémoire MEM. L'unité CPU3 comprend un module de gestion de pointeur de programme PCM3 fournissant un pointeur de programme PC au module de gestion d'adresse ADM. Le module PCM3 est identique au module PCM2 mis à part que le registre PCR2 est initialisé à une adresse A0 de la zone mémoire MA1 lorsque le signal PCS est à 0. Le séquenceur SEQ3 comprend le module de détection DTM et un décodeur d'adresse ADDC1.

La figure 8 illustre le fonctionnement du circuit intégré de la figure 7 dans le cas où le nombre de codes d'instructions du sous-programme caché est égal à 5. La figure 8 représente la forme du signal PCS, et les valeurs successives des registres PCR1, PCR2, du pointeur de programme PC et du code d'instruction Inst transmis à l'unité CPU3 par le bus de donnée DB.

Le signal PCS est tout d'abord à 0, pendant que le pointeur de programme PC mémorisé dans le registre PCR1 prend les valeurs successives N, N+1, N+2, et que le contenu du registre PCR2 est maintenu à la valeur A0. Les codes d'instruction lus dans la mémoire MEM sont alors successivement C1, C2, C3. Le module DTM détecte que le code C3 correspond à un code déclencheur du séquenceur SEQ3. Le signal PCS passe alors à 1, ce qui bloque la valeur du registre PCR1 à N+3. Le contenu du registre PCR2 est alors envoyé par le multiplexeur MUX5 en entrée du module PCTL où il est incrémenté de 1 à chaque cycle de lecture de la mémoire. Le contenu du registre PCR2 qui passe ainsi successivement à A0+1, A0+2, A0+3, puis A0+4, est envoyé sur le bus AB vers le séquenceur SEQ3, où le décodeur d'adresse ADDC1 adresse successivement les codes d'instruction du sous-programme caché mémorisé dans la zone mémoire MA1 aux adresses A0+1 à A0+4. Les codes d'instructions CC1-CC5 du sous-programme caché mémorisés dans la zone mémoire MA1 sont alors successivement lus et transmis à l'unité CPU3. A la fin de la lecture de la zone mémoire MA1, le signal PCS passe à 0. Le multiplexeur sélectionne alors la sortie du registre PCR1 toujours maintenu à la valeur N+3 qui est envoyée sur le bus d'adresse AB et en entrée du module PCTL. Le code d'instruction C4 à l'adresse N+3 est alors lu dans la mémoire MEM et le registre PCR2 est initialisé à l'adresse A0. Au cycle de lecture suivant, le module PCTL incrémente le pointeur de programme PC qui passe alors à la valeur N+4, déclenchant la lecture du code d'instruction suivant C5 dans la mémoire MEM.

La remise à 0 du signal PCS peut être effectuée par le module PCM2 qui connaît l'adresse de début A0 et l'adresse de fin du sous-programme caché. Cette opération peut alternativement être effectuée par le module DTM après un nombre prédéfini de cycles de lecture si le nombre de codes d'instructions de la séquence est fixe.

Il est à noter que les figures 3, 6 et 8 illustrent le cas d'une exécution purement séquentielle des codes d'instructions du sous-programme caché (le compteur de programme PC est incrémenté de 1 à chaque cycle de lecture. Bien entendu, l'exécution du sous-programme caché, qu'il soit stocké dans la mémoire MEM ou par le séquenceur peut comporter des sauts conditionnels ou inconditionnels. Ainsi, certains codes d'instruction CC1-CC5 du sous-programme caché peuvent être exécutés plusieurs fois par l'unité de traitement ou ne pas être lus, en raison de la présence de sauts conditionnels.

Dans les modes de réalisation précédemment décrits, et en particulier dans celui de la figure 7, la remise à 0 du signal PCS peut être alternativement effectuée par le module DTM à la suite de la détection d'un code de fin prévu à cet effet à la fin du sous-programme caché.

Alternativement, il peut être prévu un registre de contrôle pour mémoriser le nombre de codes d'instructions lus et exécutés du sous-programme caché. Lorsque le nombre de codes d'instructions lus dépasse la valeur du registre de contrôle, le signal PCS est remis à 0.

Le code de déclenchement du séquenceur SEQ1, SEQ2, SEQ3 mémorisé dans le registre RG peut être programmé d'une manière non modifiable lors de la fabrication du circuit intégré ou de l'adaptation du circuit intégré à un utilisateur.

Alternativement, le code de déclenchement peut être configurable de manière logicielle, c'est-à-dire par l'unité de traitement CPU1, CPU2, CPU3, lors de l'exécution du programme mémorisé dans la mémoire MEM. Dans ce cas, il est avantageux que le code de déclenchement soit envoyé au séquenceur par l'unité de traitement CPU1, CPU2, CPU3 sous une forme chiffrée, et soit déchiffré par le séquenceur avant d'être inscrit dans le registre RG. Dans ce cas, le séquenceur SEQ1, SEQ2, SEQ3 comprend un module de déchiffrement pour déchiffrer le code de déclenchement reçu de l'unité de traitement avant son inscription dans le registre RG.

D'une manière analogue, le sous-programme caché peut être stocké par le séquenceur SEQ1, SEQ2 ou dans la zone mémoire MA1 d'une manière non modifiable lors de la fabrication du circuit intégré ou de l'adaptation du circuit intégré à un utilisateur.

Alternativement, le sous-programme caché peut également être configurable de manière logicielle, c'est-à-dire par l'unité de traitement CPU1, CPU2, CPU3, lors de l'exécution du programme mémorisé dans la mémoire MEM. Dans ce cas, il est avantageux que les codes d'instructions du sous-programme caché soient transmis sur le bus DB vers le séquenceur SEQ1, SEQ2 ou la zone mémoire MA1 par l'unité de traitement CPU1, CPU2, CPU3 sous une forme chiffrée, et soient déchiffrés par le séquenceur avant d'être mémorisés dans l'ensemble de registres DTR ou dans la zone mémoire MA1.

De préférence, le code de déclenchement d'une part et d'autre part, les codes d'instruction du sous-programme caché sont chiffrés de manières différentes, par exemple à l'aide d'algorithmes de cryptographie différents ou à l'aide de clés secrètes différentes. Ainsi, la connaissance du code de déclenchement du séquenceur mémorisé dans le registre RG ne favorise pas la découverte des codes d'instructions du sous-programme caché mémorisé dans l'ensemble de registres DTR ou dans la zone mémoire MA1.

Dans le cas où le sous-programme caché est stocké dans une mémoire externe (cas de la figure 7), il peut être également envisagé que les codes d'instructions du sous-programme caché soient stockés sous forme chiffrée et soient déchiffrés au moment de leur lecture en mémoire. Le séquenceur SEQ3 comprend alors un module de déchiffrement qui déchiffre chaque code lu dans la zone mémoire MA1 avant de l'envoyer sur le bus de donnée DB vers l'unité de traitement CPU3.

Par ailleurs, le code d'instruction correspondant au code de déclenchement peut ne pas être exécuté, ou être exécuté par l'unité de traitement, soit avant, soit après l'exécution du sous-programme caché.

Dans les modes de réalisation précédemment décrits du séquenceur, il peut également être envisagé une fonction de désactivation du séquenceur, notamment afin de permettre à l'unité de traitement d'exécuter le code de déclenchement du séquenceur comme un code d'instruction sans déclencher le séquenceur. Cette fonction de désactivation peut être réalisée par tout moyen comme une écriture dans un registre, ou par un repérage préalable des adresses mémoire où se trouvent les codes qui doivent être traités comme un code de déclenchement du séquenceur.

Bien entendu, le circuit intégré peut comprendre plusieurs séquenceurs, chaque séquenceur étant déclenché par un code qui lui est propre. Cette disposition permet de déclencher plusieurs sous-programmes cachés distincts, chaque sous-programme caché ayant son propre code de déclenchement. La prévision de plusieurs séquenceurs présente un intérêt particulier notamment lorsque le séquenceur n'est pas configurable. Bien entendu, au lieu de dupliquer les séquenceurs, il peut être avantageux de prévoir un seul séquenceur comportant un ensemble de registres plus grand ou plusieurs banques de registres, et de prévoir un module de détection apte à détecter plusieurs codes de déclenchement et à activer l'une ou l'autre des banques de registres en fonction de la valeur du code de déclenchement détecté.

Il apparaîtra clairement à l'homme de l'art que la présente invention est susceptible de diverses variantes de réalisation. En particulier, l'invention n'est pas limitée à un code de déclenchement du séquenceur correspondant à une instruction ou un code d'instruction exécutable par l'unité de traitement. Le code de déclenchement peut également être une séquence de codes d'instructions, notamment afin d'éviter que des codes d'instruction lus dans la mémoire et à exécuter par l'unité de traitement, correspondent fortuitement au code de déclenchement. D'une manière générale, le code de déclenchement est choisi de manière à ne pas apparaître dans le programme exécuté par l'unité de traitement et est ajouté dans ce programme au(x) moment(s) opportun(s) dans la séquence des opérations réalisées par l'exécution du programme.

Si le code de déclenchement du séquenceur est une instruction ou une séquence d'instructions exécutée par l'unité de traitement, il peut être également choisi égal à l'instruction ou la séquence d'instruction se trouvant dans le programme à l'emplacement correspondant au moment où la séquence d'instructions cachée doit être exécutée.

Si le code de déclenchement du séquenceur est une instruction ou une séquence d'instructions exécutée par l'unité de traitement, l'instruction ou la séquence d'instructions peut être avantageusement choisie de manière à ne pas avoir d'incidence sur le déroulement du programme et sur les opérations qu'il réalise.

L'invention n'est pas non plus limitée à la détection d'un code de déclenchement dans les instructions qui sont lues dans la mémoire programme durant l'exécution d'un programme. Tout autre événement susceptible d'être détecté durant l'exécution du programme peut être également utilisé pour déclencher le sous-programme caché. Ainsi, le code de déclenchement peut être détecté non pas sur le bus de donnée DB, mais sur un autre bus comme le bus d'adresse AB. Dans ce cas, le module de détection est connecté au bus d'adresse. Ainsi, le programme caché peut être déclenché à la suite de la détection d'une adresse particulière sur le bus d'adresse par exemple lors de la lecture de la mémoire programme.

## Revendications

1. Procédé d'exécution par une unité de traitement (CPU1, CPU2, CPU3) d'un programme stocké dans une mémoire (MEM),
**caractérisé en ce qu'**il comprend des étapes consistant à :
- détecter une information durant l'exécution du programme par l'unité de traitement, et
- si l'information est détectée, déclencher l'exécution par l'unité de traitement d'un sous-programme caché.

2. Procédé selon la revendication 1, dans lequel l'information de déclenchement du sous-programme caché est une donnée circulant sur un bus (AB, DB).

3. Procédé selon la revendication 2, dans lequel l'information de déclenchement (C3) est modifiable par l'unité de traitement (CPU1, CPU2, CPU3).

4. Procédé selon la revendication 3, dans lequel le sous-programme caché (CC1-CC5) est modifiable par l'unité de traitement (CPU1, CPU2, CPU3).

5. Procédé selon l'une des revendications 1 à 4, dans lequel l'information de déclenchement (C3) est émise par l'unité de traitement (CPU1, CPU2, CPU3) sous une forme chiffrée, est déchiffrée, puis est stockée dans un registre (RG), le contenu du registre étant comparé à chaque lecture d'une instruction dans la mémoire (MEM).

6. Procédé selon l'une des revendications 1 à 5, dans lequel le sous-programme caché (CC1-CC5) est transmis par l'unité de traitement (CPU1, CPU2, CPU3) sous une forme chiffrée, est déchiffré, puis stocké en vue de son exécution par l'unité de traitement.

7. Procédé selon l'une des revendications 1 à 5, dans lequel le sous-programme caché (CC1-CC5) est transmis par l'unité de traitement (CPU1, CPU2, CPU3) sous une forme chiffrée, puis stocké en vue de son exécution par l'unité de traitement, et déchiffré lors de son exécution.

8. Procédé selon l'une des revendications 1 à 6, dans lequel l'information de déclenchement (C3) et le sous-programme caché (CC1-CC5) sont déchiffrés de manières différentes.

9. Procédé selon l'une des revendications 1 à 8, dans lequel le sous-programme caché (CC1-CC5) est stocké dans des registres internes (DTR).

10. Procédé selon l'une des revendications 1 à 8, dans lequel le sous-programme caché (CC1-CC5) est stocké dans la mémoire (MEM).

11. Procédé selon l'une des revendications 1 à 10, dans lequel l'information de déclenchement est une adresse de lecture de la mémoire (MEM) émise par l'unité de traitement (CPU1, CPU2, CPU3).

12. Procédé selon l'une des revendications 1 à 10, dans lequel l'information de déclenchement appartient au jeu d'instructions exécutables par l'unité de traitement (CPU1, CPU2, CPU3).

13. Procédé selon l'une des revendications 1 à 10, dans lequel l'instruction (C1-C5) lue dans la mémoire et qui correspond à l'information de déclenchement est exécutée avant ou après le sous-programme caché (CC1-CC5).

14. Procédé selon l'une des revendications 1 à 13, comprenant des étapes de maintien d'un pointeur de programme (PC) à une valeur inchangée pendant l'exécution du sous-programme caché (CC1-CC5).

15. Circuit intégré comprenant une unité de traitement (CPU1, CPU2, CPU3) reliée à une mémoire (MEM) et configurée pour lire et exécuter chaque instruction d'un programme stocké dans la mémoire (MEM),
**caractérisé en ce qu'**il comprend un module séquenceur (SEQ1, SEQ2, SEQ3) configuré pour :
- détecter une information durant l'exécution du programme par l'unité de traitement (CPU1, CPU2, CPU3), et
- si l'information est détectée, déclencher l'exécution par l'unité de traitement d'un sous-programme caché (CC1-CC5).

16. Circuit intégré selon la revendication 15, dans lequel l'information de déclenchement du sous-programme caché est une donnée circulant sur un bus (AB, DB).

17. Circuit intégré selon la revendication 16, dans lequel le module séquenceur (SEQ1, SEQ2, SEQ3) comprend un registre (RG) de mémorisation de l'information de déclenchement (C3) modifiable par l'unité de traitement (CPU1, CPU2, CPU3).

18. Circuit intégré selon l'une des revendications 15 à 17, dans lequel le module séquenceur (SEQ1, SEQ2, SEQ3) comprend un ensemble de registres (DTR) mémorisant le sous-programme caché (CC1-CC5).

19. Circuit intégré selon l'une des revendications 15 à 17, dans lequel le module séquenceur (SEQ1, SEQ2, SEQ3) est configuré pour lire le sous-programme caché (CC1-CC5) dans la mémoire (MEM).

20. Circuit intégré selon l'une des revendications 15 à 18, dans lequel l'information de déclenchement est une adresse de lecture de la mémoire (MEM) émise par l'unité de traitement (CPU1, CPU2, CPU3).

21. Circuit intégré selon l'une des revendications 15 à 19, dans lequel l'information de déclenchement appartient au jeu d'instructions exécutables par l'unité de traitement (CPU1, CPU2, CPU3).

22. Circuit intégré selon l'une des revendications 15 à 21, dans lequel le module séquenceur (SEQ1, SEQ2, SEQ3) est configuré pour déchiffrer l'information de déclenchement (C3) reçue de l'unité de traitement (CPU1, CPU2, CPU3) et la stocker dans un registre (RG) sous forme déchiffrée.

23. Circuit intégré selon l'une des revendications 15 à 22, dans lequel le module séquenceur (SEQ1, SEQ2, SEQ3) est configuré pour déchiffrer la le sous-programme caché (CC1-CC5) reçu de l'unité de traitement (CPU1, CPU2, CPU3) et stocker le sous-programme sous forme déchiffrée.

24. Circuit intégré selon l'une des revendications 15 à 23, dans lequel le module séquenceur (SEQ1, SEQ2, SEQ3) est configuré pour déchiffrer de manières différentes l'information de déclenchement (C3) et le sous-programme caché (CC1-CC5).

25. Circuit intégré selon l'une des revendications 15 à 24, dans lequel le module séquenceur (SEQ1, SEQ2, SEQ3) est configuré pour déchiffrer chaque instruction du sous-programme caché mémorisé sous une forme chiffrée avant de la transmettre pour exécution à l'unité de traitement (CPU1, CPU2, CPU3).

26. Circuit intégré selon l'une des revendications 15 à 25, dans lequel l'information de déclenchement appartient au jeu d'instructions exécutables par l'unité de traitement (CPU1, CPU2, CPU3).

27. Circuit intégré selon l'une des revendications 15 à 26, dans lequel le module séquenceur (SEQ1, SEQ2, SEQ3) est configuré pour transmettre à l'unité de traitement l'instruction interceptée qui correspond à l'information de déclenchement (C3) avant ou après les instructions du sous-programme caché (CC1-CC5).

28. Circuit intégré selon l'une des revendications 15 à 27, dans lequel l'unité de traitement (CPU1, CPU2, CPU3) est configurée pour maintenir un pointeur de programme (PC) à une valeur inchangée pendant l'exécution du sous-programme caché (CC1-CC5).

29. Circuit intégré selon l'une des revendications 15 à 28, comprenant plusieurs modules séquenceurs pour exécuter plusieurs sous-programmes cachés.
